# EUROPÄISCHE PATENTSCHRIFT

(11) **EP 1 202 869 B1**
(45) Veröffentlichungstag und Bekanntmachung des Hinweises auf die Patenterteilung: **22.01.2003**
(21) Anmeldenummer: 00972655.5
(22) Anmeldetag: 10.08.2000
(51) Int. Cl.: B60G 17/015

(54) **FEDERUNGSSYSTEM, INSBESONDERE KABINENFEDERUNGSSYSTEM**
SUSPENSION SYSTEM, ESPECIALLY CAB SUSPENSION SYSTEM
SYSTEME DE SUSPENSION, EN PARTICULIER SYSTEME DE SUSPENSION DE CABINE

(30) Priorität: 12.08.1999 DE 19938077
(43) Veröffentlichungstag der Anmeldung: 08.05.2002
(73) Patentinhaber: HYDAC Technology GmbH, D-66280 Sulzbach (DE)
(72) Erfinder: KÜMMEL, Albrecht, 66564 Ottweiler (DE)
(74) Vertreter: Bartels, Martin Erich Arthur
(86) Internationale Anmeldenummer: EP0007762
(87) Internationale Veröffentlichungsnummer: WO01012454

(56) Entgegenhaltungen:
- EP-A- 0 424 784
- FR-A- 1 298 484
- US-A- 2 860 889
- US-A- 3 533 425
- US-A- 3 836 166
- US-A- 3 908 782
- US-A- 4 174 016
- US-A- 5 044 455

## Beschreibung

Die Erfindung betrifft ein Federungssystem für Fahrzeuge und deren zumindest teilweise eine Last bildenden Komponenten, wie Fahrzeugkabinen, die in Anfahr- und Bremsrichtung Beschleunigungen unterliegen, mit mindestens einem mit einer Last beaufschlagbaren Federungszylinder, dessen Fluidräume mit einer Dämpfungseinrichtung fluidführend verbunden sind, die der freien Bewegung der Last entgegenwirkend den damit verbundenen Fluidstrom drosselt.

Bei fahrenden Arbeitsmaschinen und anderen Nutzfahrzeugen sind die Fahrzeuginsassen vor Stößen, Erschütterungen und Schwingungen zu schützen, die beim Fahren über unebenes Gelände entstehen oder die vom Motor oder anderen Aggregaten hervorgerufen werden. Um dem entgegenzuwirken, ist es im Stand der Technik bekannt, Federungssysteme einzusetzen, wobei je nach dem Ort des Einsatzes man beispielsweise zwischen Einzelradfederungen, Achsfederungen, Chassisfederungen, Kabinenfederungen und/oder Sitzfederungen unterscheidet.

Diese bekannten Federungssysteme setzen ein Federelement derart ein, daß bei Lageänderung der abzufedernden Masse eine Rückstellkraft erzeugt wird, die der Lageänderung entgegenwirkt. Werden Systeme eingesetzt, die zusätzlich eine von der Richtung und Größe der Relativgeschwindigkeit abhängige Kraft erzeugen, spricht man von sogenannten Feder-Dämpfer-Systemen. Diese können zusammen mit den jeweiligen Federelementen und der gefederten Masse ein schwingungsfähiges System bilden, das derart ausgelegt ist, daß es die Fahrzeuginsassen vor Erschütterungen und Stößen entsprechend schützen kann.

Ein dahingehendes Federungssystem ist durch die DE 28 48 339 C2 bekannt. Bei der bekannten Lösung handelt es sich um einen aktiven, mechanisch-hydraulischen Regler zur Ausgleichung von durch Störungen hervorgerufene Lageänderungen von Landfahrzeugen sowie von Teilsystemen derselben, bestehend aus einem Beschleunigungsaufnehmer mit Trägheitsmasse, einem Stellglied, einem Mittenlageregler und einem Folgeverstärker, wobei zur Verstärkung des vom Beschleunigungsaufnehmer gelieferten Signals eine Vorsteuerstufe vorgesehen ist. Dadurch, daß das Stellglied, der Folgeverstärker und ein unabhängig vom Beschleunigungsaufnehmer arbeitender Mittenlageregler zu einer Baueinheit integriert sind und daß zur Rückführung des Stellgliedes in seine Mittellage eine im Stellglied angeordnete Regelblende zur Steuerung der Druckmittelzuführung vorgesehen ist, ist ein System mit hoher Druck- und Durchflußausbeute erreicht, das gleichzeitig kompakt aufbaut. Bei der bekannten Lösung handelt es sich um eine Art Prallplattenregelung, wobei durch zwei Ansteuerdüsen je ein Ölstrom gleichzeitig austritt und auf eine Prallplatte auftrifft. Bei einer Bewegung des Sensorkörpers wird die Prallplatte gedreht, wobei sich auf der einen Seite der Abstand von der Platte zur Düsenaustrittskante vergrößert und auf der anderen Seite dieser Abstand sich verkleinert. Dadurch entsteht umgekehrt durch die Verkleinerung des Abstandes ein geringerer Ölaustrittsstrom und durch die Vergrößerung des Abstandes ein größerer Ölaustrittsstrom in der Vorsteuereinheit. Die sich so ändernden Ölströme wirken dann auf die Steuerkante des bewegbaren Kolbens in dem Federungszylinder. Eine unabhängige Androsselung der Ölströme ist dadurch nicht erreicht und im übrigen läßt sich damit auch nur die Lageänderung des Federungszylinders einregulieren.

Durch die gattungsgemäße DE 43 24 289 A1 ist eine Aktivfederung einer gefederten Masse, insbesondere in Form der Federung eines Nutzfahrzeug-Fahrerhauses, bekannt mit ansteuerbaren Aktivzylindern zwischen Fahrerhaus und Fahrzeug. Bei der bekannten Lösung wird vorgeschlagen, die Schwingungsenergie einer anderen passiven oder semiaktiven gefederten Masse, insbesondere der Aufbaufederung des Nutzfahrzeuges, als Stellenergie zur Ansteuerung der Aktivzylinder der Aktivfederung zu verwenden. Bekannte Schwingungsdämpfer sind zweckmäßigerweise bei dieser Lösung durch doppelt wirkende Differentialzylinder ersetzt, welche in einem geschlossenen Hydraulikkreis des Aktivfederungssystems angeordnet sind. Bei dem dahingehend bekannten Federungssystem mit angesteuerten Aktivzylindern und Ventilen sind eine Vielzahl von Baukomponenten zur Realisierung notwendig, die systembedingt zur Verzögerung beim Einsetzen der gewünschten Dämpfung führen. Auch ist beim Versagen nur einer Komponente die Funktionssicherheit des gesamten Systems in Frage gestellt.

Ausgehend von diesem Stand der Technik liegt der Erfindung die Aufgabe zugrunde, die bekannten Federungssysteme weiter zu verbessern, indem man eine bedienerfreundliche Grundfederung gewährleistet, die in der Lage ist, bei extremen Beschleunigungen weiterhin eine sichere Federung zu gewährleisten und derart gefährliche Fahrzustände zu vermeiden, wobei das Federungssystem mit nur wenig Baukomponenten eine rasche unmittelbare Ansteuerung des Dämpfungsverhaltens ermöglichen soll. Eine dahingehende Aufgabe löst ein Federungssystem mit den Merkmalen des Anspruches 1.

Dadurch, daß gemäß dem kennzeichnenden Teil des Anspruches 1 für die Ansteuerung der Dämpfungseinrichtung eine Sensoreinrichtung vorgesehen ist, die eine den Beschleunigungen unterliegende Steuermasse aufweist, die auf mindestens eine Drosseleinrichtung derart einwirkt, daß mit wachsender Beschleunigung eine zunehmende Drosselung des Fluidstromes erfolgt, ist innerhalb des Öl- oder Fluidstromes ein Bauteil mit einer veränderbaren Querschnittsöffnung eingesetzt, das je nach Größe der Beschleunigung des Fahrzeuges den Querschnitt umgekehrt verändert, d.h. bei großer Beschleunigung steht ein zusehends kleiner Durchmesser an der Drosselstelle zur Verfügung, wodurch eine zusehends hohe Dämpfung des Öl- und Fluidstromes erreicht wird. Damit ist eine unabhängige Androsselung der Ölströme im System mit geringen Ansteuerzeiten möglich.

Durch die Steuermasse ist erreicht, daß in Abhängigkeit der an dem Fahrzeug in oder gegen die Fahrtrichtung wirkenden Beschleunigungen eine rasche funktionssichere Drosselung des Ölstromes erfolgt, so daß sich die gewünschte Dämpfungskraft in Abhängigkeit hiervon rasch einstellt. Die beanspruchte Lösung ist rein mechanisch-hydraulisch aufgebaut, was die Funktionssicherheit erhöht, wobei das erfindungsgemäße Federungssystem mit nur wenig Baukomponenten auskommt.

Weitere vorteilhafte Ausgestaltungen sind Gegenstand der Unteransprüche.

Im folgenden wird das erfindungsgemäße Federungssystem, insbesondere in Form einer Kabinenfederung, anhand der Zeichnung näher erläutert.

Es zeigen in prinzipieller und nicht maßstäblicher Darstellung die
- Fig.1: eine erste Ausführungsform einer Kabinenfederung;
- Fig.2: eine geänderte Ausführungsform einer Kabinenfederung nach der Fig.1.

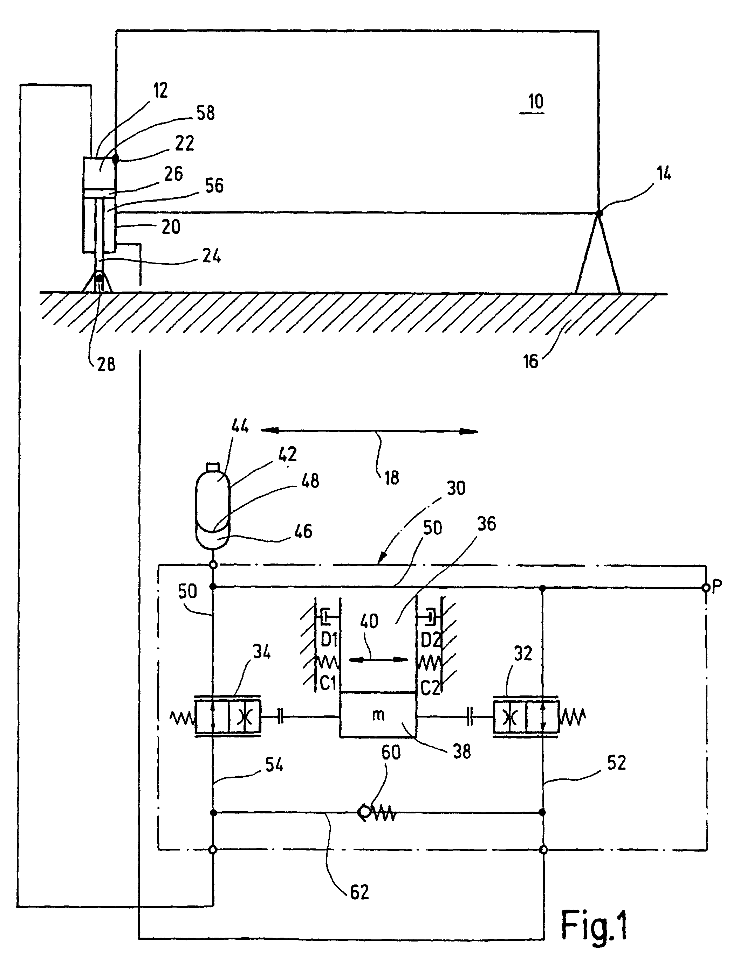

Das Federungssystem nach der Fig.1 ist mit einem mit einer Last in Form einer Fahrzeugkabine 10 beaufschlagbaren Federungszylinder 12 versehen. Die dahingehende Anordnung ist in der Figur modellhaft und abstrahiert wiedergegeben. Fahrtechnisch verhält sich die Fahrzeugkabine 10 derart, daß sie im Bereich ihres einen Endes über einen Drehpunkt bzw. eine Gelenkstelle 14 mit dem eigentlichen Fahrzeug 16, insbesondere in Form einer Landmaschine oder eines Baggers od.dgl., verbunden ist. Die wesentliche Fahrtrichtung des Fahrzeuges 16 ist in den Figuren mit einem Doppelpfeil 18 angegeben. Der Federungszylinder 12 ist mit seinem Zylindergehäuse 20 über eine weitere Gelenkstelle 22 mit der Fahrzeugkabine 10 verbunden. Die Kolbenstange 24 des Federungszylinders 12 endet mit ihrem einen freien Ende an dem Kolben 26 und mit ihrem anderen freien Ende ist sie über eine dritte Gelenkstelle 28 mit dem Fahrzeug 16 schwenkbar verbunden. Aufgrund dieser Verbindung über die angesprochenen Gelenkstellen kann das Zylindergehäuse 20 der Bewegung der Fahrzeugkabine 10 nachfolgen, wobei Kolbenstange 24 und Kolben 26 aufgrund der dritten Gelenkstelle 28 ihre Lage relativ zum Fahrzeug 16 beibehalten. Bewegt sich das Fahrzeug 16 in Blickrichtung auf die Figuren gesehen nach rechts in Richtung des rechten Teiles des Doppelpfeiles 18 und findet eine schlagartige Verzögerung durch einen Bremsvorgang statt, schwenkt die Fahrzeugkabine 10 beim dahingehenden Abbremsvorgang im Uhrzeigersinn um die Gelenkstelle 14, wobei das Zylindergehäuse 20 sich mit der Fahrzeugkabine 10 mit bewegt und nach oben bewegt wird. Kommt es in umgekehrter Richtung, beispielsweise beim Anfahren des Fahrzeuges 16, zu einer Beschleunigung in entgegengesetzter Richtung, schwenkt die Fahrzeugkabine 10 um die Gelenkstelle 14 in entgegengesetzter Richtung, also entgegen dem Uhrzeigersinn, und das mit der Fahrzeugkabine 10 verbundene Zylindergehäuse 20 bewegt sich in Blickrichtung auf die Figuren gesehen nach unten in Richtung auf das Fahrzeug 16 hin. Die dahingehenden relativen Beschleunigungen entstehen insbesondere deshalb, weil die Fahrzeugkabine 10 mit ihrer Masse der Bewegung des Fahrzeuges 16 entsprechend nachfolgt.

Die Fluidräume des Federungszylinders 12 sind mit einer als Ganzes mit 30 bezeichneten Dämpfungseinrichtung fluidführend verbunden, wobei, was noch näher gezeigt werden wird, die Dämpfungseinrichtung der freien Bewegung der Last in Form der Federungskabine 10 entgegenwirkend den damit verbundenen Fluidstrom zwischen dem Federungszylinder 12 und einer Fluidversorgung drosselt. Die Dämpfungseinrichtung 30 ist mit einer wegabhängig einstellbaren Drosseleinrichtung versehen, die bei den vorliegenden Ausführungsformen zwei Proportional-Drosselventile 32 und 34 aufweist. Für die Ansteuerung des jeweiligen Proportional-Drosselventils 32,34 ist die Dämpfungseinrichtung mit einer die Beschleunigungen erfassenden Sensoreinrichtung 36 versehen, die eine den Beschleunigungen unterliegende Steuermasse 38 aufweist. Die Steuermasse 38 ist, wie in den Figuren mit einem Doppelpfeil 40 angegeben, in denselben Richtungen verfahr- bzw. beschleunigbar wie das Fahrzeug 16 selbst mit der Fahrzeugkabine 10. Die Steuermasse 38 ist beschleunigungsabhängig, wie dargestellt, und ist über ein Federsystem C1, C2 wieder in seine in der Fig.1 dargestellte Ausgangsstellung rückstellbar. Um die Empfindlichkeit des Beschleunigungssensors mittels der Steuermasse 38 zu reduzieren, ist des weiteren in einander gegenüberliegenden Bewegungsrichtungen je eine Dämpfungseinrichtung D1, D2 vorhanden. In Abhängigkeit der gewählten Werte für die Federsteifigkeit sowie für die Dämpfung reagiert der Beschleunigungssensor mehr oder weniger schnell auf die anstehenden Beschleunigungsänderungen.

Bei der in der Fig.1 dargestellten Grundstellung sind die Proportional-Drosselventile 32,34 in ihrer durchgeschalteten Schaltstellung gezeigt und die eigentliche Federung der Fahrzeugkabine 10 erfolgt über den Hydrospeicher 42, dessen Gasseite 44 von der Fluidseite 46 über ein übliches Trennmittel, beispielsweise in Form einer elastischen Trennmembran 48, getrennt ist. Bei kleinen Schwingungsbewegungen der Fahrzeugkabine 10 um ihre Gelenkstelle 14 erfolgt die dahingehende Abfederung über den Hydrospeicher 42, indem die vorzugsweise mit Stickstoff befüllte Gasseite die dahingehenden Stöße dämpft. Hierfür ist der Hydrospeicher 42 mit seiner Fluidseite 46 über Verbindungsleitungen 50 sowohl an das Drosselventil 32 als auch an das Drosselventil 34 angeschlossen. Über weitere Verbindungsleitungen 52 und 54 ist wiederum das Drosselventil 32 an den Stangenraum 56 bzw. das Drosselventil 34 an den Kolbenraum 58 des Federungszylinders 12 fluidführend angeschlossen.

Die Verbindungsleitungen 50 sind darüber hinaus an eine Fluidversorgung P angeschlossen, mittels der es beispielsweise möglich ist, eine übliche Niveaueinstellung für das Fahrzeug vorzusehen oder Temperatur- und Gewichtsanpassungen vorzunehmen, beispielsweise im letzteren Fall, falls eine Bedienperson die Kabine betritt und derart deren Betriebsgewicht erhöht. Verzichtet man hierauf, ist es auch möglich, auf die Fluidversorgung P zu verzichten und das System geschlossen zu betreiben, d.h. die im System befindlichen Fluidmengen über die Drosseleinrichtungen und unter Verwendung des Hydrospeichers 42 zwischen den Fluidräumen des Federungszylinders 12 in Abhängigkeit vom Bewegungszustand des Fahrzeuges hin und her zu verschieben. Da der Kolbenraum 58 über ein größeres Fluidvolumen verfügt als der zugeordnete Stangenraum 56, befindet sich zwischen den beiden Verbindungsleitungen 52 und 54 ein Rückschlagventil 60, das in Richtung des Stangenraumes 56 hin öffnet und in eine Leitung 62 zwischen die Verbindungsleitungen 52 und 54 geschaltet ist. Beim Ausfahren des Zylinders wird das ringseitige Verdrängervolumen über die Drossel 32 geführt und damit gedämpft.

Des besseren Verständnisses wegen wird nunmehr das erfindungsgemäße Federungssystem anhand seiner Funktion näher erläutert. Ist das Fahrzeugsystem keinen starken Beschleunigungen weder in der einen noch in der anderen Richtung ausgesetzt, ist die Dämpfungseinrichtung 30 im wesentlichen in Ruhe, d.h. die beiden Proportional-Drosselventile 32,34 sind in ihrer gezeigten durchgeschalteten Stellung, wobei der Hydrospeicher 42 die Grundfederung übernimmt, indem die Gasseite 44 die Federungsstöße puffert, die durch die Fluidverschiebung zwischen Stangenraum 56 und Kolbenraum 58 des Federungszylinders 12 gegeben sind. Kommt es nun zum Auftreten von Beschleunigungen, beispielsweise bedingt durch einen Bremsvorgang, hat die Fahrzeugkabine 10 aufgrund ihrer Massenträgheit gegenüber dem Fahrzeug 16 das Bestreben, sich im Uhrzeigersinn um die Gelenkstelle 14 zu bewegen. Dabei wird auch das Zylindergehäuse 20 nach oben bewegt mit der Folge, daß sich der Stangenraum 56 im Fluidvolumen verringert und der Kolbenraum 58, der vom Stangenraum 56 über den Kolben 26 getrennt ist, nimmt volumenmäßig entsprechend zu. Des weiteren bewegt sich die Steuermasse 38 des vorzugsweise mit dem Fahrzeug 16 verbundenen Dämpfungssystems 30 in Blickrichtung auf die Fig.1 gesehen nach rechts, und zwar entgegen dem Federdämpfersystem C1, C2; D1, D2, so daß über die Drossel des Proportional-Drosselventils 32 die aus dem Stangenraum 56 über die weitere Verbindungsleitung 52 zugeführte Fluidmenge in Richtung der Verbindungsleitung 50 gedrosselt wird. Dabei sind die Proportional-Drosselventile 32 und 34 derart ausgelegt, daß je stärker diese über die Steuermasse 38 betätigt werden, die Drosselung stetig zunimmt. Da beim Bremsen das Proportional-Drosselventil 34 in seiner in der Fig.1 gezeigten voll durchlässigen Stellung verbleibt, erfolgt die Drosselung ausschließlich über das Ventil 32 und die derart gedrosselte Fluidmenge kann über die Verbindungsleitung 50 das durchgeschaltete Proportional-Drosselventil 34 und die weitere Verbindungsleitung 54 in Richtung des Kolbenraumes 58 des Federungszylinders 12 strömen. Durch die dahingehende Dämpfung über das Proportional-Drosselventil 32 ist der üblichen Federung eine beschleunigungsabhängige Dämpfung oder Federung überlagert, die auch bei extremen Bremsbeschleunigungen einen sicheren Systemzustand zwischen Fahrzeugkabine 10 und Fahrzeug 16 erlaubt.

Kommt es in der anderen Richtung zu Beschleunigungen, beispielsweise beim Anfahren, bleibt trägheitsbedingt die Fahrzeugkabine 10 gegenüber dem Fahrzeug 16 zurück und das Fluidvolumen auf seiten des Kolbenraumes 58 nimmt ab. Da dann die Steuermasse 38 in der entgegengesetzten Richtung gemäß dem Doppelpfeil 40 in Blickrichtung auf die Fig.1 gesehen nach links sich verschiebt, verbleibt das Ventil 32 in der durchgeschalteten Stellung und die Drosselung des Proportional-Drosselventils 34 wird mit zunehmender Beschleunigung in drosselnder Weise betätigt. Auch hierdurch wird wiederum der schädlichen Beschleunigung in dämpfender Weise entgegengewirkt. Je stärker die Beschleunigungs- und Verzögerungswerte sind, umso mehr wird die jeweilige Steuermasse 38 ausgelenkt und umso mehr wird die jeweils freie Querschnittsfläche bei den Ventilen 32,34 verringert mit der Folge, daß die veränderliche Dämpfung zunimmt und der Auslenkbewegung der Fahrzeugkabine 10 entgegenwirkt.

Aufgrund des Federdämpfungssystems C1, C2, D1 und D2 ist gewährleistet, daß zum einen die Steuermasse 38 nicht zum Schwingen kommt und im übrigen in einer Grundsituation bei einer gleichmäßigen Fahrgeschwindigkeit in die Ursprungslage zurückkehrt, so daß die beiden Ventile 32,34 in ihre in der Fig.1 geschaltete Durchlaßstellung gelangen können. Federelemente der Ventile 32,34 unterstützen die dahingehende Rückstellbewegung in die durchgeschaltete Grundfederstellung.

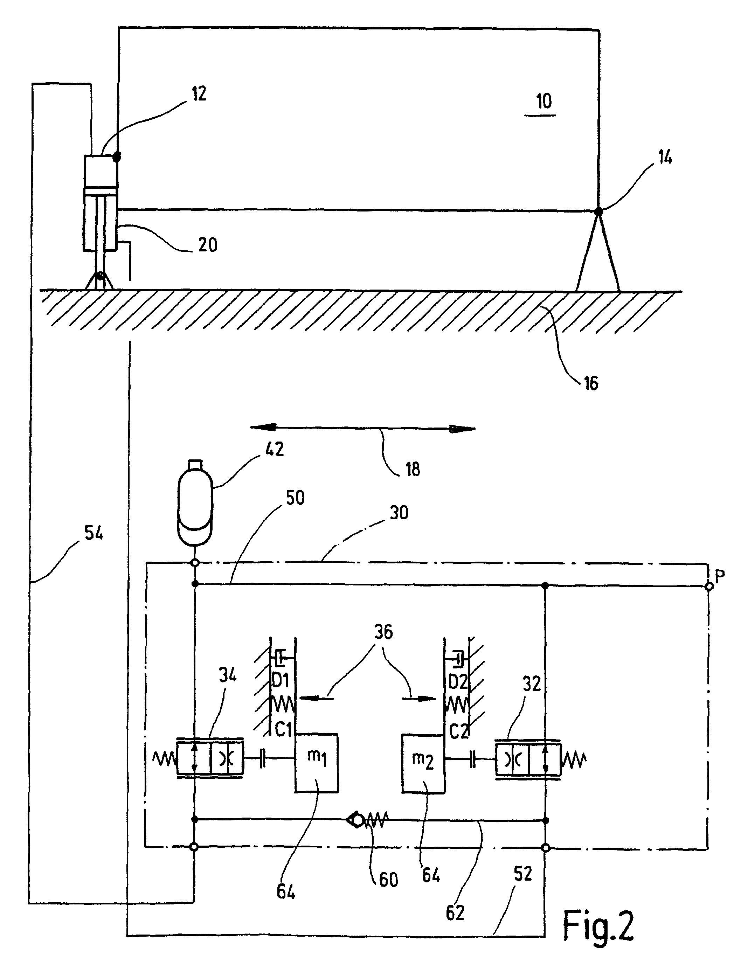

Die Ausführungsform nach der Fig.2 entspricht im wesentlichen der geschilderten Ausführungsform nach der Fig.1, so daß insofern für diese Bauteile dieselben Bezugszeichen eingesetzt werden. Das bisher Gesagte gilt insoweit auch für die Ausführungsform nach der Fig.2.

Die Ausführungsform nach der Fig.2 unterscheidet sich von der nach der Fig.1, daß die angesprochene Steuermasse 38 in zwei Teilsteuermassen 64 bzw. m1, m2 aufgetrennt ist. Sind die beiden Steuerteilmassen 64 von ihrer Masse her gleich ausgebildet, ergibt sich im wesentlichen kein anderes Verhalten als das bei dem Federungssystem nach der Fig.1. Vorzugsweise sind jedoch die Steuerteilmassen 64 unterschiedlich ausgebildet, beispielsweise die mit m2 bezeichnete Steuerteilmasse 64 im Gewicht schwerer gewählt als die mit m1 bezeichnete Steuerteilmasse 64, so daß beim Abbremsen die Masse m2 stärker anspricht und eine verstärkte Drosselung über das Proportional-Drosselventil 32 vornimmt. Demgemäß können für die Federungen andere Federungswerte im Hinblick auf Anfahren und Abbremsen vorgegeben werden.

Über die Fluidversorgung P läßt sich beispielsweise über eine nicht näher dargestellte weitere Steuereinrichtung eine Niveauregulierung für das Fahrzeug 16 erreichen oder das System an vorgegebene Temperatur- und Gewichtsbedingungen anpassen. Auch ist denkbar, daß bei einer extremen Neigung des Fahrzeuges 16 die Kabine 10 über die Einstellung des Federungszylinders 12 im wesentlichen in einer horizontalen Stellung gehalten wird, um die Bedienung zu erleichtern.

Mit dem erfindungsgemäßen Federungssystem muß man mithin nicht wie bisher einen Kompromiß eingehen zwischen weicher Federung zum Fahren und einer harten Dämpfung zur Vermeidung des Durchschlagens in die mechanischen Endlager eines Fahrzeuges, beispielsweise bei extremen Anfahr- und Bremsbedingungen, bei denen große negative oder positive Beschleunigungen auftreten. Vielmehr ist mit dem erfindungsgemäßen Federungssystem eine angenehme Grundfederung erreicht, die bei den angesprochenen extremen Fahrbedingungen beschleunigungsabhängig mit einer angepaßten Dämpfung überlagert wird, wobei die dahingehenden Einregelvorgänge sehr rasch von statten gehen.

## Patentansprüche

1. Federungssystem für Fahrzeuge und deren zumindest teilweise eine Last bildenden Komponenten, wie Fahrzeugkabinen (10), die in Anfahr- und Bremsrichtung Beschleunigungen unterliegen, mit mindestens einem mit einer Last beaufschlagbaren Federungszylinder (12), dessen Fluidräume mit einer Dämpfungseinrichtung (30) fluidführend verbunden sind, die der freien Bewegung der Last entgegenwirkend den damit verbundenen Fluidstrom drosselt, **dadurch gekennzeichnet, daß** für die Ansteuerung der Dämpfungseinrichtung (30) eine Sensoreinrichtung (36) vorgesehen ist, die eine den Beschleunigungen unterliegende Steuermasse (38) aufweist, die auf mindestens eine Drosseleinrichtung derart einwirkt, daß mit wachsender Beschleunigung eine zunehmende Drosselung des Fluidstroms erfolgt.

2. Federungssystem nach Anspruch 1, **dadurch gekennzeichnet, daß** die Dämpfungseinrichtung (30) mit mindestens einer wegabhängig einstellbaren Drosseleinrichtung versehen ist, insbesondere in Form eines Proportional-Drosselventils (32,34).

3. Federungssystem nach Anspruch 2, **dadurch gekennzeichnet, daß** die Ansteuerung des jeweiligen Proportional-Drosselventils (32,34) über die Sensoreinrichtung (36) erfolgt.

4. Federungssystem nach einem der Ansprüche 1 bis 3, **dadurch gekennzeichnet, daß** die Steuermasse (38) direkt die jeweilige Drosseleinrichtung betätigt und mit einem Federdämpfersystem (C1,C2; D1,D2) zusammenwirkt.

5. Federungssystem nach Anspruch 4, **dadurch gekennzeichnet, daß** zwei Drosseleinrichtungen vorgesehen sind und daß in der Anfahrrichtung die eine Drosseleinrichtung und in der entgegengesetzten Bremsrichtung die andere Drosseleinrichtung für eine mit wachsender Beschleunigung zunehmende Drosselung betätigbar sind.

6. Federungssystem nach Anspruch 5, **dadurch gekennzeichnet, daß** die eine Drosseleinrichtung an den Kolbenraum (58) und die andere Drosseleinrichtung an den Stangenraum (56) als Fluidräume des jeweiligen Federungszylinders (12) anschließbar sind.

7. Federungssystem nach einem der Ansprüche 1 bis 6, **dadurch gekennzeichnet, daß** die Fahrzeugkabine (10) mit einem Fahrzeug (16) über mindestens eine Gelenkstelle (14) schwenkbar verbunden ist sowie mit dem Gehäuse (20) des jeweiligen Federungszylinders (12), das an die Fahrzeugkabine (10) sowie an das Fahrzeug (16) schwenkbar angelenkt ist.

8. Federungssystem nach Anspruch 7, **dadurch gekennzeichnet, daß** die beiden Drosseleinrichtungen in Richtung des jeweiligen Federungszylinders (12) über eine Verbindungsleitung (52,54) fluidführend miteinander in Verbindung stehen, die mit einem Rückschlagventil (60) versehen ist, das in Richtung des Stangenraumes (56) öffnet.

9. Federungssystem nach Anspruch 8, **dadurch gekennzeichnet, daß** mindestens ein Hydrospeicher (42) zumindest in unbetätigtem Zustand der Drosseleinrichtungen auf die Fluidräume einwirkt und derart die Grundfederung der Fahrzeugkabine (10) sicherstellt und daß die Dämpfungseinrichtung (30) an eine Fluidversorgung (P) anschließbar ist.

10. Federungssystem nach einem der Ansprüche 1 bis 9, **dadurch gekennzeichnet, daß** die Steuermasse (38) in zwei Steuerteilmassen (64) aufgeteilt getrennt die Ansteuerung der jeweiligen Drosseleinrichtung vornimmt.

## Claims

1. Suspension system for vehicles and components thereof which form a load at least partly, such as vehicle cabs (10) which are subject to acceleration in the starting and braking direction, comprising at least one suspension cylinder (12) that can be subject to a load, its fluid chambers being hydraulically connected to a shock-absorbing device (30) which counteracts the free movement of the load by throttling the associated fluid flow, **characterised in that** a sensor device is provided to control the shock-absorbing device (30), which has a control mass (38) subjected to accelerations, the said mass acting on at least one throttle device in such a manner that the fluid current becomes throttled at an increasing rate with rising acceleration.

2. Suspension system according to claim 1, **characterised in that** the shock-absorbing device has at least one throttle device adjustable in relation to the stroke, especially in the form of a proportional throttle valve (32, 34).

3. Suspension system according to claim 2, **characterised in that** the respective proportional throttle valve (32, 34) is controlled via the sensor device (36).

4. Suspension system according to one of the claims 1 to 3, **characterised in that** the control mass (38) operates the respective throttle device directly and co-operates with a spring damper system (C1, C2; D1, D2).

5. Suspension system according to claim 4, **characterised in that** it has two throttle devices and that one throttle device can be operated in the starting direction and the other throttle device can be operated with a throttling action growing with increasing acceleration in the opposite braking direction.

6. Suspension system according to claim 5, **characterised in that** one throttle device can be connected to the piston chamber (58) and the other throttle device to the rod chamber (56) as fluid chambers of the respective suspension cylinder (12).

7. Suspension system according to one of the claims 1 to 6, **characterised in that** the vehicle cab (10) is connected to the vehicle swivellably via at least one articulated point (14) and with the housing (20) of the respective suspension cylinder (12) which is swivellably joined to the vehicle cab (10) and the vehicle (16).

8. Suspension system according to claim 7, **characterised in that** the two throttle devices are communicating with each other hydraulically via a connecting line (52, 54) in the direction of the respective suspension cylinder (12), the said line having a non-return valve (60) opening in the direction of the rod chamber (56).

9. Suspension system according to claim 8, **characterised in that** at least one hydraulic accumulator (42) acts on the fluid chambers when the throttle devices are in an un-operated state thus securing the basic suspension of the vehicle cab (10), and **in that** the shock-absorbing device (30) is connectable to a fluid supply (P).

10. Suspension system according to one of the claims 1 to 9, **characterised in that** the control mass (38), split into two control part masses (64), separately control the respective throttle device.

## Revendications

1. Système de suspension pour véhicules et leurs composants constituant au moins partiellement une charge, tels que des cabines de conduite (10), qui sont soumis à des accélérations en direction de démarrage et de freinage, avec au moins un vérin de suspension pouvant être soumis à une charge (12), dont les compartiments à fluide sont reliés en mode de conduction de fluide à un dispositif d'amortissement (30), qui étrangle le flux de fluide correspondant en s'opposant ainsi aux mouvements libres de la charge, **caractérisé en ce que** pour le pilotage du dispositif d'amortissement (30), il est prévu un dispositif de capteurs (36), qui comprend une masse de pilotage (38) soumise aux mouvements d'accélération, laquelle agit de telle manière sur au moins un dispositif d'étranglement qu'un étranglement croissant du flux de fluide a lieu au fur et à mesure de l'augmentation de l'accélération.

2. Système de suspension selon la revendication 1, **caractérisé en ce que** le dispositif d'amortissement (30) est muni d'au moins un dispositif d'étranglement, en particulier en forme de vanne d'étranglement proportionnelle (32, 34), pouvant être réglé en fonction du trajet.

3. Système de suspension selon la revendication 2, **caractérisé en ce que** l'activation de la vanne d'étranglement proportionnelle respective (32, 34) a lieu par l'intermédiaire du dispositif de capteurs (36).

4. Système de suspension selon l'une des revendications 1 à 3, **caractérisé en ce que** la masse de pilotage (38) actionne directement le dispositif d'étranglement respectif et agit de concert avec un système d'amortissement à ressorts (C1,C2 ; D1,D2).

5. Système de suspension selon la revendication 4, **caractérisé en ce que** deux dispositifs d'étranglement sont prévus et **en ce que**, pour un étranglement s'accroissant avec l'augmentation de l'accélération, il est possible d'actionner l'un des dispositifs d'étranglement dans la direction de démarrage et l'autre dispositif d'étranglement dans la direction de freinage opposée.

6. Système de suspension selon la revendication 5, **caractérisé en ce qu'**en tant que compartiments à fluide du vérin de suspension respectif (12), l'un des dispositifs d'étranglement peut être raccordé au compartiment du piston (58) et l'autre dispositif d'étranglement au compartiment de la tige (56).

7. Système de suspension selon l'une des revendications 1 à 6, **caractérisé en ce que** la cabine de conduite (10) est reliée de manière pivotante à un véhicule (16) par l'intermédiaire d'au moins un point d'articulation (14) ainsi qu'au boîtier (20) du vérin de suspension respectif (12), lequel boîtier est articulé de manière pivotante avec la cabine de conduite (10) ainsi qu'avec le véhicule (16).

8. Système de suspension selon la revendication 7, **caractérisé en ce qu'**en direction du vérin de suspension respectif (12), les deux dispositifs d'étranglement sont reliés entre eux en mode de conduction de fluide par l'intermédiaire d'une conduite de liaison (52, 54), qui est munie d'un clapet anti-retour (60) ouvrant en direction du compartiment de la tige (56).

9. Système de suspension selon la revendication 8, **caractérisé en ce qu'**au moins un accumulateur hydraulique (42) agit au moins dans l'état de non-actionnement des dispositifs d'étranglement sur les compartiments à fluide et assure ainsi la suspension de base de la cabine de conduite (10) et **en ce que** le dispositif d'étranglement (30) peut être raccordé à une alimentation en fluide (P).

10. Système de suspension selon l'une des revendications 1 à 9, **caractérisé en ce que** la masse de pilotage (38), séparée en deux masses de pilotage partielles (64), assure séparément l'activation du dispositif d'étranglement respectif.
